# EUROPÄISCHE PATENTSCHRIFT

(11) **EP 2 710 782 B1**
(45) Veröffentlichungstag und Bekanntmachung des Hinweises auf die Patenterteilung: **29.07.2015**
(21) Anmeldenummer: 12728460.2
(22) Anmeldetag: 13.06.2012
(51) Int. Cl.: H04L 29/06, H04L 29/08, H04L 12/24

(54) **VERFAHREN UND VORRICHTUNG ZUM ÜBERWACHEN EINES VPN-TUNNELS**
METHOD AND APPARATUS FOR MONITORING A VPN TUNNEL
PROCÉDÉ ET DISPOSITIF DE SURVEILLANCE D'UN TUNNEL VPN

(30) Priorität: 29.06.2011 DE 102011078309
(43) Veröffentlichungstag der Anmeldung: 26.03.2014
(73) Patentinhaber: Siemens Aktiengesellschaft, 80333 München (DE)
(72) Erfinder: FALK, Rainer, 85586 Poing (DE); FRIES, Steffen, 85598 Baldham (DE)
(86) Internationale Anmeldenummer: PCT/EP2012/061214
(87) Internationale Veröffentlichungsnummer: WO 2013/000710

(56) Entgegenhaltungen:
- EP-A2- 1 420 317
- EP-A2- 1 523 149
- WO-A1-2005/006705
- US-A1- 2003 200 456

## Beschreibung

Die Erfindung betrifft den Schutz von Safety-relevanten Anwendungen in einem VPN-Tunnel/virtuelles privates Netzwerk. Industrielle VPN-Anwendungen sind bereits mehrfach bekannt. Damit lassen sich beispielsweise kryptographisch geschützte Verbindungen zwischen Fertigungszellen einer Fertigungsautomatisierungsanlage bereitstellen. Ebenso können damit Verbindungen zu Einrichtungen wie beispielsweise einer Weichensteuerung oder Signalen zur Fahrtfreigabe in der Eisenbahnautomatisierung, die von einer zentralen Kontrollstelle wie einem Stellwerk angesteuert und überwacht werden, sowie Verbindungen für die sichere Fernwartung einer Automatisierungsanlage bereitgestellt werden.

VPN-Tunnel, die derartige Automatisierungsanlagen und deren Komponenten bzw. Steuerungen und Steuergeräte zur Datenkommunikation miteinander verbinden, müssen korrekt funktionieren. Dies ist notwendig, um sogenannte Safety-Anforderungen der entsprechenden Anlage zuverlässig zu gewährleisten.

Aus der Kommunikationstechnik sind beispielsweise unterschiedliche Arten von virtuellen privaten Netzwerken bekannt. Es gibt verschiedene Arten virtueller privater Netzwerke, die mit Kommunikationsverschlüsselung in Zusammenhang stehen. Beispiele hierfür sind Sicherheitsprotokolle, wie MACsec/ MediumAccess-security, IPsec/InternetProtoll-security oder SSL/TLS, sowie über ein IP-Proktoll getunnelte Layer2-Protokolle unter Verwendung von Kommunikationsprotokollen, wie L2TP oder PPTP.

Unter Safety bzw. funktionaler Sicherheit wird allgemein die Betriebssicherheit verstanden. Objektiv ist das Nichtvorhandensein an einem Ort von Gefahr subjektiv die Gewissheit vor möglichen Gefahren geschützt zu sein. Anders ausgedrückt ist Sicherheit das Geschütztsein vor Bedrohung oder Schaden. In Verbindung damit können Schutzziele für ein Kommunikationssystem beispielsweise unterteilt werden in Kategorien wie - Vertraulichkeit, Integrität, Authentizität oder Verbindlichkeit. Dabei kann die Vertraulichkeit darin bestehen, dass eine Nachricht für Dritte nicht lesbar ist. Integrität sagt etwas darüber aus, dass eine Nachricht nicht manipuliert ist. Authentizität steht in Verbindung mit dem Nachweis der Identität des Senders bzw. des Empfängers. Eine Verbindlichkeit steht in Zusammenhang mit einer Urheberschaft einer Nachricht.

Am Beispiel einer Gehäuseüberwachung zur Feststellung einer unautorisierten Veränderung kann wie folgt vorgegangen werden:
Es wird eine industrielle Firewall mit integrierter VPN/ virtuelles privates Netz - Funktion eingerichtet, welche über einen Meldekontakt ein Statussignal zur Funktionsüberwachung des Gerätes bereitstellt. Über diesen Meldekontakt wird durch Kontaktunterbrechung gemeldet. Dabei können folgende Funktionsstörungen beispielhaft auftreten:
   - Der Ausfall von Versorgungsspannungen,
   - Eine dauerhafte Störung im Gerät, wie interne Spannungsversorgung,
   - Der fehlerhafte Linkstatus mindestens eines Ports / Anschluss entsprechend einer unterbrochenen Verbindung zu einem Netzwerkgerät,
   - Über- oder Unterschreiten der eingestellten Temperaturschwellwerte, oder
   - das Entfernen des Autokonfigurations-Adapters ACA.

Ein konventionelles virtuelles privates Netzwerk VPN dient dazu, Teilnehmer eines Netzes an ein anderes Netz anzubinden. Dabei müssen diese Netzwerke nicht zueinander kompatibel sein. Einfach ausgedrückt wird das ursprüngliche Netzwerk aus Sicht der VPN-Verbindung auf die Funktion eines Verlängerungskabels reduziert, welches den VPN-Teilnehmer ausschließlich mit der Anschlussstelle des anderen Netzes verbindet, in der Regel einem VPN-Gateway/Netzkoppler. Je nach verwendetem VPN-Protokoll kann beispielsweise eine zusätzliche Verschlüsselung ergänzt werden, die eine abhör- und manipulationssichere Kommunikation zwischen den VPN-Partnern ermöglicht.

Ein sogenanntes SSL-VPN, auch bezeichnet als Web-basiertes VPN, unterstützt einen VPN-Modus im Sinne des konventionellen VPNs. Dabei wird ein SSL-Protokoll oder ein TLS-Protokoll verwendet. Unter der gleichen Bezeichnung laufen auch Systeme mit einem Fernzugriff auf Unternehmensanwendungen und gemeinsam genutzte Ressourcen. Dies bedeutet, dass beispielsweise ein SSL-VPN-Partner über eine gesicherte Verbindung zugreifen kann, ohne jedoch einen direkten Zugriff auf das Unternehmensnetz zu erhalten.

Allgemein kann ein VPN-Netzwerk wie ein eigenständiges Netz, gekapselt in einem anderen Netz, betrachtet werden. Dabei ist im alltäglichen Gebrauch in der Regel ein virtuelles IP-Netz im Einsatz, welches innerhalb eines anderen IP-Netzes, meist dem öffentlichen Internet, ein in sich geschlossenes Teilnetz bildet.

Bekannt sind sogenannte VPN-Monitoring-Tools zur Überwachung eines VPN-Tunnels. Auch ist bekannt, dass über SNMP der Status eines VPN-Tunnels überwachbar ist. Dadurch ist in einem separaten Netzwerkmanagement-System eine Information über nicht funktionierende VPN-Netzwerkverbindungen verfügbar, um beispielsweise einen Netzwerkadministrator zu benachrichtigen. Weiterhin sind Tools bekannt, die bestimmte Anwendungsprozesse auf einem Arbeitsplatz-PC unter Windows beenden, falls kein VPN-Tunnel auf dem Arbeitsplatz-PC vorhanden ist. Damit wird die Aussendung von vertraulichen Nachrichten durch einen Anwendungsprozess des Arbeitsplatz-PCs über eine ungeschützte Verbindung unterbunden.

Sogenannte Netzwerk-Monitoring Tools zur generellen Überwachung von Netzwerkkomponenten, bzw. dem Zustand des Netzes, sind ebenfalls bekannt. Dabei wird beispielsweise überprüft, ob Fremdgeräte an ein bestimmtes Netz angeschlossen sind, oder nachträglich angeschlossen wurden. Es sind NetzwerkManagement-Tools zur Überwachung von IP-Systemen und Netzwerken bekannt, wobei insbesondere VPN-Komponenten bzw. Netzwerkfunktionen überwacht werden. Unter NAC-Systemen werden Netzwerkzugriffsüberwachungssysteme verstanden, die feststellen, ob regelkonforme Geräte an das Netzwerk angeschlossen sind.

Die US 2003/200456 A1 beschreibt eine Überwachung eines IP-sec-Tunnels zwischen Gateways oder Terminals, wobei eine Fehlerbenachrichtigung das Senden von weiteren Paketen unterbindet, wenn unverschlüsselte Pakete im IPsec-Tunnel detektiert werden.

Eine umfassende Überwachung von VPN-Tunneln die zur Ansteuerung von Steuergeräten eingesetzt werden, in Verbindung mit Safety-Funktionen/Sicherheitsfunktionen ist bisher nicht bekannt.

Der Erfindung liegt die Aufgabe zugrunde, einen VPN-Tunnel derart zu überwachen, dass Steuerungsfunktionen an einem Steuergerät betriebssicher entsprechend sogenannter Safety-Funktionen gewährleistet sind.

Die Lösung dieser Aufgabe geschieht durch die jeweilige Merkmalskombination der unabhängig formulierten Patentansprüche.

Der Erfindung liegt die Erkenntnis zugrunde, dass die Ansteuerung eines Steuergerätes durch eine Steuerung betriebssicher gestaltet werden kann, wenn dies mittels mindestens eines VPN-Tunnels, der in der Regel kryptographisch abgesichert ist, geschieht. Dazu wird in einem Steuerungssystem, welches in oder an dem VPN-Tunnel eine oder mehrere VPN-Boxen verwendet, verfügbare Kommunikation zur Übertragung von Steuerbefehlen nur dann ermöglicht, wenn auch tatsächlich ein geeigneter VPN-Tunnel verfügbar ist.

Ein funktionsfähiger VPN-Tunnel kann die Basis für Safetyrelevante betriebssichere Steuerungsvorgänge bilden. Eventuelle Fehler werden frühzeitig, und nicht erst durch einen Totalausfall, erkannt wenn beispielsweise keine Daten mehr ankommen.

Es wird ein Mechanismus vorgeschlagen, der die Funktionalität und in einer Weiterbildung auch die Güte eines eingerichteten VPN-Tunnels überwacht. Dazu wird eine von einer Auswerteeinheit generierte Information in Form eines entsprechenden physikalischen oder logischen Signals an eine Steuerung und/oder ein Steuergerät ausgegeben. Dieses Signal kann auch an verschiedenen Stellen angezeigt werden.

Zur Auswertung im Zuge der Überwachung des VPN-Tunnels können unterschiedliche Testverfahren eingesetzt werden. Die betrachteten Verfahren weisen in der Regel Verschlüsselungskomponenten auf. Zum kryptographischen Schutz einer Datenkommunikation sind unterschiedliche Verfahren bekannt. Der VPN-Tunnel wird beispielsweise mit üblichen Daten getestet, wobei bestimmte Merkmale der Datenübertragung ausgewertet werden, bestimmte Schwellwerte Verzögerungsraten oder Fehlerraten.

Angesteuert werden beispielsweise Steuergeräte wie sie in der Energieautomatisierung eingesetzt werden oder in einem Bahnautomatisierungssystem oder in einem Verkehrssteuerungssystem, beispielsweise Ampelanlagensteuerung, Wechselbeschilderung, oder Schalter zum Betätigen von Weichen oder Bahnschranken oder zum Schalten einer Energieverteilstation oder eines Umspannwerkes, sowie Sensoren zum Erfassen eines Stromverbrauches, einer Temperatur oder eines Statussignals eines Aktors, z.B. "Schranke geschlossen".

Eine VPN-Box liefert ein Freigabe-/Safe-For-Use-Signal, welches einen bestimmten Status wiedergibt. Wurde dieses Signal ausgegeben, so liegt eine korrekte Funktionsweise des VPN-Tunnels vor. Das Signal wird vorzugsweise als separates Hardware-Signal realisiert. Alternativ kann die Information, die damit zusammenhängt, auch über ein physikalisches Signal einer Kommunikationsschnittstelle in Richtung auf die Steuerung bzw. das Steuergerät signalisiert werden. Damit wird nach einer Überprüfung eine Information bereitgestellt, die anzeigt, ob ein funktionsfähiger VPN-Tunnel vorliegt.

Es ist besonders vorteilhaft, durch Senden von Prüfnachrichten über einen VPN-Tunnel, beispielsweise eine Verkehrsflussanalyse und Seitenkanalangriffe zu erschweren bzw. zu verhindern. Gerade damit wird verhindert, dass von außen Rückschlüsse auf den augenblicklichen Systemzustand bzw. die Automatisierungsaktionen gezogen werden können.

Da zwischen einer Steuerung, beispielsweise einem Stellwerk und einem Steuergerät eine Datenkommunikation notwendig ist, werden beispielsweise Steuernachrichten ausgetauscht. Die Kommunikation erfolgt in vorteilhafter Weise über ein Ethernet- oder IP-Netzwerk. Diese Steuernachrichten werden über ein Netzwerk übertragen, das potenziell Angriffen ausgesetzt ist. Aus diesem Grunde wird am VPN-Tunnel jeweils auf Steuerungsseite und auf Seite des Steuergerätes eine VPN-Box angeordnet, die Steuernachrichten bei der Übertragung über das Netzwerk kryptographisch verschlüsselt. Eine VPN-Box verfügt über feste oder konfigurierbare kryptographische Schlüssel, um bei einem VPN-Verbindungsaufbau Sitzungsschlüssel einzurichten, die für den Schutz der VPN-Nachrichten notwendig sind.

Ein Signal, welches die Betriebssicherheit/Safe-for-use anzeigt, wird von einer VPN-Box erzeugt. Dieses kann als separates physikalisches Signal, als Schaltsignal, herausgeführt werden. Alternativ kann es als logisches Signal über die Kommunikationsschnittstelle zum Steuergerät bereitgestellt werden.

Für die Ermittlung des Betriebssicherheits-Signals werden unterschiedliche Überwachungsformen angewandt. Im Rahmen der Überwachung werden Prüfnachrichten über den VPN-Tunnel bzw. mit der weiteren VPN-Box ausgetauscht. Diese können ebenfalls mittels Sitzungsschlüssel geschützt sein oder vorzugsweise mittels eines separaten Monitoring-Sitzungsschlüssels Mo-SK behaftet sein. Diese Verschlüsselung kann mittels einer Schlüsselableitungsfunktion eingerichtet werden. Alternativ kann eine separate Schlüsselvereinbarung eingerichtet werden. In einer weiteren Variante sind zum Monitoring separate kryptographische Schlüssel konfiguriert.

Besondere Vorteile ergeben sich, wenn das Betriebssicherheit-Signal, welches angibt, dass die Funktionalität des VPN-Tunnels korrekt ist, dieses Signal der zentralen Steuerung von der entsprechend zugeordneten VPN-Box zugeführt wird.

Erfindungsgemäß ist eine VPN-Box auch für weitere Steuerungsszenarien einsetzbar. Bei der Ansteuerung von Energieautomatisierungs-Steuergeräten von einem Leitstand aus, oder der Steuerung einer Industriebahn, die über keinen Zugführer verfügt, ist eine VPN-Box mit VPN-Tunnel einsetzbar.

Zur Steigerung der Sicherheit bei der Überwachung eines VPN-Tunnels kann in vorteilhafter Weise ein separater Prüfkanal eingerichtet werden, über den beispielsweise Fehlermeldungen oder Statusprüfungen übertragen oder abgewickelt werden. Dies kann auch für einen nichtaktiven Tunnel, der beispielsweise nur im Standby betrieben wird, bei dem also keine Nutzdaten übertragen werden, eingesetzt werden.

Vorteilhaft werden Prüfnachrichten dann übertragen, wenn keine Steuerdaten des Steuergerätes und/oder Steuerdaten der Steuerung über den VPN-Tunnel übertragen werden. In einer Variante werden Prüfnachrichten dann übertragen, wenn die Netzbelastung der Steuerdaten des Steuergerätes und/oder der Steuerdaten der Steuerung über den VPN-Tunnel unterhalb eines vorgegebenen Schwellwertes liegen, z.B. unterhalb 5 Nachrichten je Sekunde oder unterhalb 1000 Byte je Sekunde.

Bei der Überwachung können allgemein Verzögerungen, Fehlerraten und ähnliches als Parameter gemessen und überprüft werden. En weiterer Schritt besteht in der Überprüfung, ob Schwellwerte eingehalten werden.

Es ist besonders vorteilhaft zur Überwachung eines VPN-Tunnels die Zeitstempel verschiedener Nachrichten zwischen einer Steuerung und einem Steuergerät beziehungsweise zwischen unterschiedlichen VPN-Boxen auszuwerten. So kann die Darstellung von Daten dahingehend gefiltert werden, dass nur verschlüsselte Daten vorliegen, beziehungsweise dass überprüft wird, ob im Tunnel sämtliche Daten die dort übertragen werden sollen auch im Tunnel vorhanden sind. Anders betrachtet dürfen keine der betroffenen Daten außerhalb des Tunnels auftauchen.

Eine weitere vorteilhafte Möglichkeit zur Überwachung eines VPN-Tunnels besteht darin, den Klartext-Kanal zu überwachen, wobei unerwartete Fremdkomponenten erfasst werden können. So kann z.B. ein Fehler der VPN-Box erkannt werden, bei dem Steuerdaten des verbundenen Steuergeräts nicht wie vorgesehen verschlüsselt, sondern im Klartext übertragen werden.

Falls an einer VPN-Box bei der Überwachung des entsprechenden VPN-Tunnels ein Problem erkannt wird, indem eine Abweichung zwischen einem vorgegebenen Profil eines Systems oder eines Gerätes von einem aufgenommenen Profil vorliegt, so kann mit einem "Reset" ein Neustart Start der Softwarekomponenten erzwungen werden. Alternativ kann die VPN-Box sich deaktivieren, sodass eine Reaktivierung lediglich über eine Wartungsschnittstelle ausführbar ist. Dieser Zustand entspricht einem nichtvorhandenen Betriebssicherheits-Signal/Safe-for-Use. In diesem Fall wird an einem Steuergerät ein Notfallprogramm eingestellt bzw. aktiviert, welches einen betriebssicheren Zustand gewährleistet. Dabei wird insbesondere ein mit der VPN-Box verbundenes Steuergerät in einen betriebssicheren Zustand versetzt.

Die Generierung einer sogenannten "Log"-Nachricht, beispielsweise über SNMP oder über "syslog" kann vorteilhaft sein, um eine spätere Analyse der Fehlfunktion zu ermöglichen.

Neben der Generierung eines Betriebssicherheits-Signals kann eine VPN-Box auch ein entsprechendes Warnsignal über einen zweiten bzw. alternativen Kommunikationskanal aussenden. Als Anwendungsbeispiel ist eine drahtgebundene Weichensteuerung zu nennen, die den Ausfall der VPN-Kommunikationsverbindung über eine Drahtlosschnittstelle an eine zentrale Stelle oder an Züge, die auf der Strecke befindlich sind, meldet.

Es ist vorteilhaft, wenn eine VPN-Box ein lokales System über den Ausfall der Netzwerkkommunikationsverbindung informiert. Damit kann das lokale System kontrolliert gestoppt werden. Ziel ist es, einen betriebssicheren Zustand an einem Steuergerät regelmäßig aufrecht zu erhalten.

Im Folgenden wird anhand von schematischen Figuren die Erfindung anhand von nicht einschränkenden Ausführungsbeispielen beschrieben.
- Figur 1: zeigt schematisch die Überwachung eines kryptographischen VPN-Tunnels 8 zwischen Steuerung 1 und Steuergerät 2, welches ein Signal, eine Weiche oder eine Schranke bedeuten kann,
- Figur 2: zeigt den prinzipiellen Aufbau einer VPN-Box 6,
- Figur 3: zeigt den Ablauf einer Routine am VPN-Tunnel 8 über eine VPN-Box 6, indem ein internes VPN-Prüfmodul gestartet wird, welches die korrekte Funktionsweise des VPN-Tunnels kontinuierlich überprüft.

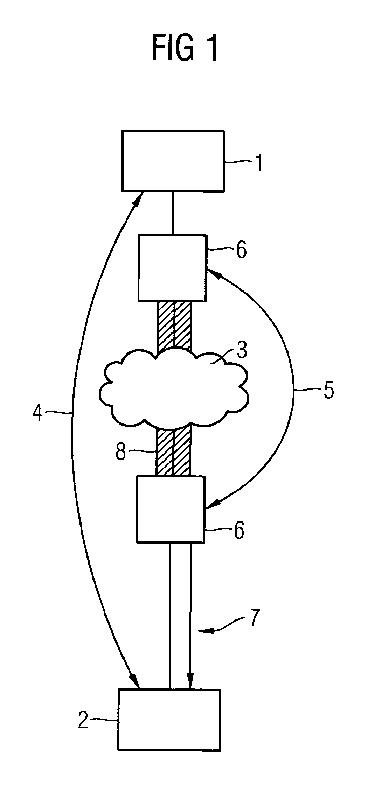

Figur 1 gibt eine erfindungsgemäße Darstellung eines VPN-Tunnels 8 wieder. Zwischen einer Steuerung 1 und einem Steuergerät 2 ist ein VPN Tunnel 8 aufgebaut. Die Steuerung 1 kann beispielsweise ein Stellwerk sein. Als Steuergerät werden unterschiedlichste Bauteile oder Systeme angesteuert, wie beispielsweise im Eisenbahnverkehr: Signale, Weichen, Schranken oder im Industriebereich: Geräte zur Ansteuerung von Energieautomatisierungsgeräten oder ähnliches. Die Distanz zwischen der Steuerung 1 und dem Steuergerät 2 wird durch den VPN-Tunnel 8 überbrückt. Dies kann partiell oder vollständig durch Drahtverbindungen realisiert werden. Örtliche Gegebenheiten können drahtlose Verbindungen zur Übertragung von Daten notwendig machen.

Durch die Vielfalt von Datenverbindungen werden für bestimmte Systeme Netzwerke gebildet, die beispielsweise hinsichtlich der technischen Merkmale, der Betreiber und der Qualität klar abgegrenzt sind.

In Figur 1 wird ein Netzwerk 3 verwendet, welches zur Realisierung des VPN-Tunnels 8 dient. Das heißt der Datenverkehr zwischen einer Steuerung 1 und einem Steuergerät 2 kann durch Austausch von Steuernachrichten abgewickelt werden. Die Kommunikation erfolgt beispielsweise über ein Ethernet oder ein IP-Netzwerk. Diese Steuernachrichten werden über das Netzwerk 3 übertragen, welches potentiell Angriffen ausgesetzt ist. Dies ist insbesondere dadurch gegeben, dass öffentlich zugängliche Netzwerke verwendet werden, wie Internet, WLAN, Mobilfunknetze. Aus diesem Grund sind im VPN-Tunnel 8, in der Nähe der Steuerung 1 und in der Nähe des Steuergerätes 2 jeweils eine VPN-Box 6 vorgesehen, die Steuernachrichten 4 bei der Übertragung über das Netzwerk 3 kryptographisch schützt. Außerdem kann eine VPN-Box 6 beispielsweise über feste oder konfigurierbare kryptographische Schlüssel verfügen, um bei einem VPN-Verbindungsaufbau Sitzungsschlüssel einzurichten, die für den kryptographischen Schutz der Steuernachrichten eingesetzt werden. Die VPN-Box 6 entschlüsselt bzw. verschlüsselt Steuernachrichten des Steuergeräts 2, sodass sie bei der Übertragung über das Netzwerk 2 kryptographisch geschützt sind. Eine Klartext-Steuernachricht wird zwischen der VPN-Box 6 und dem Steuergerät 2 über eine nicht kryptographisch geschützte lokale Kommunikationsverbindung, z.B. ein Ethernet, übertragen. Diese Kommunikationsverbindung kann z.B. physikalisch geschützt sein, indem die VPN-Box 6 das Steuergerät 2 und die dazwischen liegende lokale Kommunikationsverbindung in einem verschlossenen Schaltschrank angeordnet sind.

Für die Übertragung über ein Netzwerk können unterschiedliche Protokolle eingesetzt werden.

In Figur 1 ist weiterhin ein Betriebssicherheits-Signal/Safe-for-Use-Signal 7 zwischen der VPN-Box 6 und dem Steuergerät 2 in Form eines Pfeils dargestellt. Diese VPN-Box 6 erzeugt das Betriebssicherheit-Signal SFU 7, falls die Überprüfung des VPN-Tunnels 8 ergeben hat, dass eine korrekte Datenübertragung möglich ist, d.h., dass der VPN-Tunnel 8 korrekt funktioniert.

Eine Variante zur Überwachung des VPN-Tunnels 8 sieht den Einsatz von Prüfnachrichten 5 zwischen den VPN-Boxen 6 vor. Damit wird beispielsweise eine Verkehrsflussanalyse oder ein Seitenkanalangriff erschwert, womit Rückschlüsse auf den augenblicklichen Systemzustand bzw. auf Automatisierungsaktionen ermöglich werden könnten. Obwohl in Figur 1 die Pfeile für Steuernachrichten 4 und für Prüfnachrichten 5 außerhalb des zentralen Bereichs des Tunnels 8 dargestellt sind, werden diese Nachrichten innerhalb des VPN-Tunnels 8 übertragen. Dies steht nicht dem Einsatz eines zusätzlichen parallelen VPN-Tunnels entgegen.

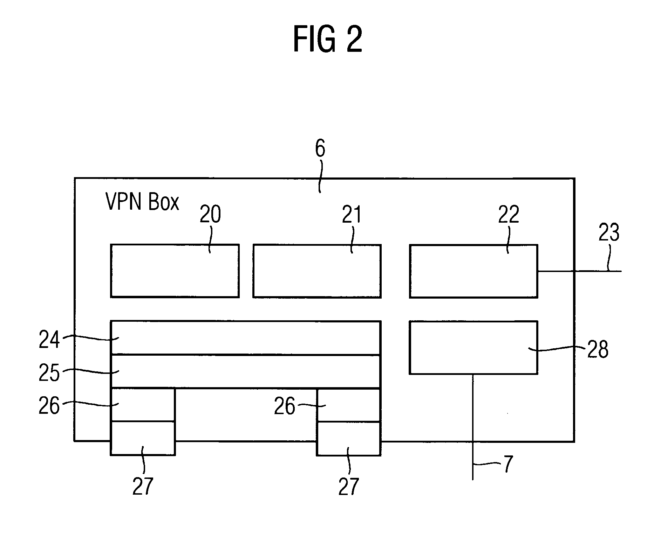

Die in Figur 2 dargestellte VPN-Box 6 gibt den inneren Aufbau einer VPN-Box 6 wieder. Diese enthält folgende Komponenten:
- 20: Hardware (HW Security Modul),
- 21: IKE (V1/V2),
- 22: Management Interface,
- 23: USB,
- 24: IPsec,
- 25: IP,
- 26: Ethernettreiber,
- 27: NIC, Kommunikations-Schnittstelle,
- 28: VPN Monitor,
- 7: Betriebssicherheits-Signal/Safe-for-Use/SfU.

Dabei wirken die einzelnen Komponenten wie folgt zusammen:
Zwei Kommunikationsschnittstellen werden als Hardware-Schnittstelle 27 / Network Interface Connector NIC 27 über Ethernet realisiert. Die Ansteuerung geschieht von einem Ethernet-Treiber 26. Ein IP-Kommunikations-Stack realisiert die IP-Kommunikation 25 zwischen den beiden Schnittstellen. Ein IPsec-Protokoll 24 schützt die IP-Kommunikation bzw. den VPN-Tunnel 8. Die Sicherheitsbeziehungen Security Association SA und IPsec werden durch ein IKE-Protokoll 21 eingerichtet. Der bzw. die konfigurierbaren oder festen kyrptographischen Schlüssel, beispielsweise Secret Key SK, Private Key, Public Key oder Zertifikate sind vorzugsweise in einem Hardware-Security-Modul 20 gespeichert.

Der VPN-Monitor 28 überwacht einen aufgebauten und eingerichteten VPN-Tunnel 8 und stellt abhängig vom Ergebnis eines Vergleichs ein Freigabe- oder Betriebssicherheits-Signal/ Safe-For-Use-Signal SfU 7 bereit. Über eine Managementschnittstelle 22, beispielsweise USB 23, können Konfigurationseinstellungen der VPN-Box 6 vorgenommen werden. Außerdem können Sensoren vorgesehen sein, die ein Öffnen eines Gehäuses oder Beschädigungen, sowie Betrieb außerhalb des vorgesehen Temperaturbereichs usw. erkennen.

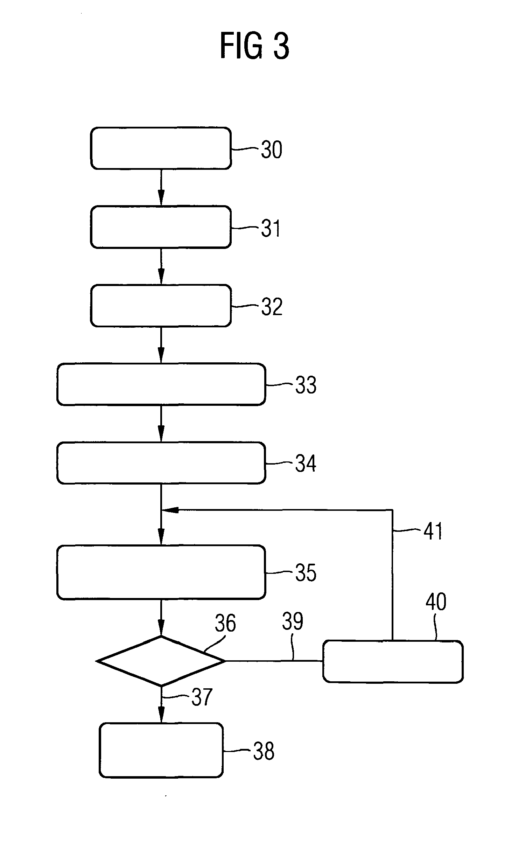

Figur 3 zeigt den Aufbau eines VPN-Tunnels 8 mit einer VPN-Box 6. Parallel dazu wird ein internes VPN-Prüfmodul gestartet, welches anhand einer eingelesenen Prüfparameterdatei die korrekte Funktionsweise des VPN-Tunnels kontinuierlich überprüft. Im Fehlerfall wird kein Safe-for-Use-Signal 7 bereitgestellt. Auch kann ein zentrales System über eine Störung über einen alternativen Kommunikationskanal informiert werden.

Figur 3 zeigt insgesamt folgende Bestandteile:
- 30: Start
- 31: Einlesen von VPN-Parametern
- 32: Start VPN-Tunnel 8
- 33: Einlesen der VPN-Prüfparameter
- 34: Start VPN-Prüfkomponente
- 35: Überwachen des VPN-Tunnels 8 entsprechend der Prüfparameter,
- 36: Abweichung
- 37: JA,
- 38: Statusmeldung an zentrales System bzw. Steuerung
- 39: NEIN
- 40: Nachrichtenaustausch

Entsprechend dem Ablaufschema in Figur 3 wird ein VPN-Tunnel 8 auf Funktionalität geprüft. Diese Prüfung kann beispielsweise durch den Vergleich eines realen Profils, das den tatsächlich vorhandenen aktuellen Zustand der VPN-Verbindung charakterisiert, mit einem hinterlegten Profil ausgeführt werden.

Ergibt sich eine Abweichung bei einem oder mehreren Parametern, so wird am Entscheidungsknoten für eine Abweichung 36 beispielsweise eine Statusmeldung 38 an ein zentrales System, wie die Steuerung 1, ausgegeben. Die zugrunde gelegten Prüfergebnisse beruhen auf VPN-Regeln.

Wird entsprechend Figur 3 bei der Entscheidung, ob eine Abweichung 36 vorliegt oder nicht in Richtung auf "Nein" 39 entschieden, so findet ein Nachrichtenaustausch, beispielsweise ein Austausch von Steuernachrichten 4, statt. Es wird dabei ein Safe-for-Use-Signal bereitgestellt.

Wird ein VPN-Tunnel 8 zusätzlich hinsichtlich der Güte überwacht, so kann dies beispielsweise durch folgendes geschehen:
Zunächst kann eine Überwachung einer erfolgreich durchgeführten Authentisierung eines oder beider Kommunikationspartner erfolgen, wodurch festgestellt werden kann, dass der VPN-Tunnel 8 besteht.

Danach erfolgt die Überwachung der Einhaltung einer vorgegebenen Sicherheitsvereinbarung, beispielsweise Re-Keying, die Verwendung vorgegebener Ciphersuites, Authentisierung oder auch Autorisierung.

Direkt oder indirekt mit einer VPN-Box 6 verbundene Gehäusesensoren können die Überwachung eines Einbauschrankes, in welchem die VPN-Box untergebracht ist, übernehmen.

Durch die Aussendung von VPN-Prüfnachrichten 5 über den VPN-Tunnel 8 werden Nutzdaten geliefert, sowie eine Verkehrsflussanalyse verhindernde oder zumindest erschwerende Hintergrundnachrichten in entsprechenden Sendepausen.

Die VPN-Prüfkomponente kann ein kontinuierliches Überwachen und Anzeigen der ausgetauschten Prüfnachrichten sowie der eigentlichen Nutzdaten durchführen.

## Patentansprüche

1. Verfahren zur Überwachung eines eingerichteten und kryptographisch geschützten VPN-Tunnels (8) auf Funktionalität, mit mindestens einer am VPN-Tunnel(8) positionierten VPN-Box (6),
**dadurch gekennzeichnet, dass** der VPN-Tunnel (8) für die Datenkommunikation zwischen einer Steuerung (1) und einem Steuergerät (2) eingerichtet ist und die VPN-Box (6) ein Betriebssicherheits-Signal (7) an das Steuergerät (2) liefert, wenn die Überwachung ergeben hat, dass der VPN-Tunnel (8) vorgegebene Merkmale erfüllt, so dass an dem Steuergerät (2) ein regulärer Betriebszustand aufgenommen oder beibehalten werden kann.

2. Verfahren nach Anspruch 1, **dadurch gekennzeichnet, dass** im VPN-Tunnel (8) in räumlicher Nähe der Steuerung (1) und/oder in räumlicher Nähe des Steuergeräts (2) jeweils die mindestens eine VPN-Box (6) eingesetzt wird, wobei mindestens eine Steuernachricht (4) über ein Netzwerk (3) übertragen wird.

3. Verfahren nach einem der vorhergehenden Ansprüche, **dadurch gekennzeichnet, dass** über den VPN-Tunnel (8) mindestens eine Prüfnachricht (5) gesendet wird.

4. Verfahren nach Anspruch 1 oder 2, **dadurch gekennzeichnet, dass** das Betriebssicherheit-Signal (7) der mindestens einen VPN-Box (6) der Steuerung (1) und/oder dem Steuergerät (2) zugeführt wird.

5. Verfahren nach einem der vorhergehenden Ansprüche, **dadurch gekennzeichnet, dass** das Betriebssicherheit-Signal (7) ein physikalisches Signal ist, welches die Funktionalität des VPN-Tunnels (8) bestätigt.

6. Verfahren nach einem der vorhergehenden Ansprüche, **dadurch gekennzeichnet, dass** in der Steuerung (1) die Auswertung hinsichtlich der korrekten Funktionalität des VPN-Tunnels (8) geschieht.

7. Verfahren nach einem der vorhergehenden Ansprüche, **dadurch gekennzeichnet, dass** für die Datenkommunikation im VPN-Tunnel (8) ein Ethernet- oder ein IP-Netzwerk (3) eingesetzt wird.

8. Verfahren nach einem der vorhergehenden Ansprüche, **dadurch gekennzeichnet, dass** die mindestens eine VPN-Box (6) über kryptographische Schlüssel verfügt, die für den Schutz der mindestens einen VPN-Nachricht (4) eingerichtet sind.

9. Verfahren nach Anspruch 8, **dadurch gekennzeichnet, dass** eine separate Schlüsselvereinbarung eingerichtet wird.

10. Verfahren nach einem der vorhergehenden Ansprüche, **dadurch gekennzeichnet, dass** zur Überwachung des VPN-Tunnels (8) mindestens eine Prüfnachricht (5) zwischen mehreren VPN-Boxen (6) einseitig oder gegenseitig ausgetauscht wird.

11. Verfahren nach einem der vorhergehenden Ansprüche, **dadurch gekennzeichnet, dass** die mindestens eine VPN-Box (6) für die Ansteuerung unterschiedlicher Steuergeräte (2) für unterschiedliche elektromechanische Funktionen ein Betriebssicherheit-Signal (7) bei korrekter Funktionalität des VPN-Tunnels (8) ausgibt.

12. Verfahren nach einem der vorhergehenden Ansprüche, **dadurch gekennzeichnet, dass** zusätzlich zur Überwachung des VPN-Tunnels (8) auf Funktionalität dessen Güte überwacht wird.

13. Verfahren nach einem der vorhergehenden Ansprüche, **dadurch gekennzeichnet, dass** ein separater VPN-Tunnel (8) als Prüfkanal für Statusprüfungen oder Fehlermeldungen eingerichtet wird.

14. Verfahren nach einem der vorhergehenden Ansprüche, **dadurch gekennzeichnet, dass** für die Überwachung des VPN-Tunnels (8) Datenverzögerungs- oder Fehlerraten gemessen werden und mit festgelegten Schwellwerten verglichen werden.

15. Verfahren nach einem der vorhergehenden Ansprüche, **dadurch gekennzeichnet, dass** eine Überwachung eines VPN-Tunnels (8) durch Vergleich der Zeitstempel unterschiedlicher Nachrichten, die über den VPN-Tunnel (8) übertragen werden, vorgenommen wird.

16. Verfahren nach einem der vorhergehenden Ansprüche, **dadurch gekennzeichnet, dass** bei der Überwachung eines VPN-Tunnels (8) sämtliche, für eine Übertragung im VPN-Tunnel (8) vorgesehenen Daten, durch den VPN-Tunnel (8) geführt werden.

17. Verfahren nach einem der vorhergehenden Ansprüche, **dadurch gekennzeichnet, dass** eine Überwachung des Klartext-Kanals vorgenommen wird.

18. Verfahren nach einem der vorhergehenden Ansprüche, **dadurch gekennzeichnet, dass** für den Fall, dass ein Problem am VPN-Tunnel (8) erkannt wird, ein Neustart oder eine Deaktivierung einer oder mehrerer der mindestens einen VPN-Box (6) vorgenommen wird.

19. Verfahren nach einem der vorhergehenden Ansprüche, **dadurch gekennzeichnet, dass** zur Durchführung einer späteren Analyse einer Funktionsstörung eine LOG-Nachricht über separate Übertragungswege übermittelt wird.

20. Verfahren nach einem der vorhergehenden Ansprüche, **dadurch gekennzeichnet, dass** beim Ausfall der VPN-Kommunikation eine Nachricht an eine zentrale oder lokale Stelle erfolgt, damit ein lokales System in einen betriebssicheren Zustand gebracht werden kann.

21. Vorrichtung zur Durchführung einer Überwachung eines eingerichteten und kryptographisch geschützten VPN-Tunnels (8) auf Funktionalität und/oder Güte entsprechend einem der Ansprüche 1 - 20, mit
mindestens einer am VPN-Tunnel (8) positionierten VPN-Box (6), **dadurch gekennzeichnet, dass** der VPN-Tunnel (8) für die Datenkommunikation zwischen einer Steuerung (1) und einem Steuergerät (2) eingerichtet ist und die VPN-Box (6)zur Überwachung vorhanden ist und durch diese ein Betriebssicherheit-Signal (7) an das Steuergerät (2) lieferbar ist, wenn die Überwachung ergeben hat, dass der VPN-Tunnel (8) vorgegebene Merkmale erfüllt, so dass an dem Steuergerät (2) ein regulärer Betriebszustand aufgenommen oder beibehalten werden kann.

22. Vorrichtung nach Anspruch 21, wobei
mindestens eine am VPN-Tunnel (8) positionierte VPN-Box (6) zur Überwachung vorhanden ist,
die Auswertung hinsichtlich der korrekten Funktionalität und/oder Güte des VPN-Tunnels (8) zumindest teilweise in der Steuerung (1) geschieht und
ein Betriebssicherheit-Signal (7) an das Steuergerät (2) lieferbar ist, wenn die Überwachung ergeben hat, dass der VPN-Tunnel (8) vorgegebene Merkmale erfüllt, so dass an dem Steuergerät (2) ein regulärer Betriebszustand aufgenommen oder beibehalten werden kann.

## Claims

1. Method for monitoring an established and cryptographically protected VPN tunnel (8) for functionality, with at least one VPN box (6) positioned on the VPN tunnel (8),
**characterized in that** the VPN tunnel (8) is established for data communication between a controller (1) and a control device (2), and the VPN box (6) delivers an operational safety signal (7) to the control device (2) if the monitoring has revealed that the VPN tunnel (8) complies with predefined features, with the result that a regular operating state can be started or maintained in the control device (2).

2. Method according to Claim 1, **characterized in that** the at least one VPN box (6) is respectively used in the VPN tunnel (8) in the spatial vicinity of the controller (1) and/or in the spatial vicinity of the control device (2), at least one control message (4) being transmitted via a network (3).

3. Method according to one of the preceding claims, **characterized in that** at least one test message (5) is transmitted via the VPN tunnel (8).

4. Method according to Claim 1 or 2, **characterized in that** the operational safety signal (7) from the at least one VPN box (6) is supplied to the controller (1) and/or to the control device (2).

5. Method according to one of the preceding claims, **characterized in that** the operational safety signal (7) is a physical signal which confirms the functionality of the VPN tunnel (8).

6. Method according to one of the preceding claims, **characterized in that** the evaluation with respect to the correct functionality of the VPN tunnel (8) is carried out in the controller (1).

7. Method according to one of the preceding claims, **characterized in that** an Ethernet or an IP network (3) is used for data communication in the VPN tunnel (8).

8. Method according to one of the preceding claims, **characterized in that** the at least one VPN box (6) has cryptographic keys which are established for protecting the at least one VPN message (4).

9. Method according to Claim 8, **characterized in that** a separate key agreement is established.

10. Method according to one of the preceding claims, **characterized in that** at least one test message (5) is unilaterally or mutually interchanged between a plurality of VPN boxes (6) in order to monitor the VPN tunnel (8).

11. Method according to one of the preceding claims, **characterized in that** the at least one VPN box (6) outputs an operational safety signal (7) in the event of correct functionality of the VPN tunnel (8) for the purpose of controlling different control devices (2) for different electromechanical functions.

12. Method according to one of the preceding claims, **characterized in that**, in addition to monitoring the VPN tunnel (8) for functionality, its quality is monitored.

13. Method according to one of the preceding claims, **characterized in that** a separate VPN tunnel (8) is established as a test channel for status checks or error messages.

14. Method according to one of the preceding claims, **characterized in that** data delay rates or error rates are measured and are compared with stipulated threshold values for the purpose of monitoring the VPN tunnel (8).

15. Method according to one of the preceding claims, **characterized in that** a VPN tunnel (8) is monitored by comparing the time stamps of different messages which are transmitted via the VPN tunnel (8).

16. Method according to one of the preceding claims, **characterized in that** all data intended to be transmitted in the VPN tunnel (8) are led through the VPN tunnel (8) when monitoring a VPN tunnel (8).

17. Method according to one of the preceding claims, **characterized in that** the plain text channel is monitored.

18. Method according to one of the preceding claims, **characterized in that** one or more of the at least one VPN box (6) are restarted or deactivated if a problem in the VPN tunnel (8) is detected.

19. Method according to one of the preceding claims, **characterized in that** a LOG message is transmitted via separate transmission paths in order to subsequently analyse a malfunction.

20. Method according to one of the preceding claims, **characterized in that**, if VPN communication fails, a message is sent to a central or local station so that a local system can be changed to a state of safe operation.

21. Apparatus for monitoring an established and cryptographically protected VPN tunnel (8) for functionality and/or quality according to one of Claims 1-20, having at least one VPN box (6) positioned on the VPN tunnel (8), **characterized in that** the VPN tunnel (8) is established for data communication between a controller (1) and a control device (2), and the VPN box (6) is provided for the purpose of monitoring and can deliver an operational safety signal (7) to the control device (2) if the monitoring has revealed that the VPN tunnel (8) complies with predefined features, with the result that a regular operating state can be started or maintained in the control device (2).

22. Apparatus according to Claim 21,
at least one VPN box (6) positioned on the VPN tunnel (8) being provided for the purpose of monitoring,
the evaluation with respect to the correct functionality and/or quality of the VPN tunnel (8) being carried out at least partially in the controller (1), and
an operational safety signal (7) being able to be delivered to the control device (2) if the monitoring has revealed that the VPN tunnel (8) complies with predefined features, with the result that a regular operating state can be started or maintained in the control device (2).

## Revendications

1. Procédé de surveillance de la fonctionnalité d'un tunnel VPN (8) installé et protégé de manière cryptographique, avec au moins une box VPN (6) positionnée sur le tunnel VPN (8), **caractérisé en ce que** le tunnel VPN (8) est adapté pour la communication de données entre un système de commande (1) et un appareil de commande (2) et **en ce que** la box VPN (6) délivre un signal de sécurité de fonctionnement (7) à l'appareil de commande (2) lorsque la surveillance a montré que le tunnel VPN (8) remplissait des critères prédéfinis de sorte que l'appareil de commande (2) puisse passer dans un mode de fonctionnement normal ou le maintenir.

2. Procédé selon la revendication 1, **caractérisé en ce qu'**à chaque fois au moins une box VPN (6) est utilisée dans le tunnel VPN (8) à proximité du lieu du système de commande (1) et/ou à proximité du lieu de l'appareil de commande (2), dans lequel au moins un message de commande (4) est transmis via un réseau (3).

3. Procédé selon l'une des revendications précédentes, **caractérisé en ce qu'**au moins un message de contrôle (5) est émis via le tunnel VPN (8).

4. Procédé selon la revendication 1 ou 2, **caractérisé en ce que** le signal de sécurité de fonctionnement (7) de la au moins une box VPN (6) est amené au système de commande (1) et/ou à l'appareil de commande (2).

5. Procédé selon l'une des revendications précédentes, **caractérisé en ce que** le signal de sécurité de fonctionnement (7) est un signal physique qui confirme la fonctionnalité du tunnel VPN (8).

6. Procédé selon l'une des revendications précédentes, **caractérisé en ce que** l'évaluation de la fonctionnalité correcte du tunnel VPN (8) a lieu dans le système de commande (1).

7. Procédé selon l'une des revendications précédentes, **caractérisé en ce qu'**un réseau Ethernet ou IP (3) est utilisé pour la communication de données dans le tunnel VPN (8).

8. Procédé selon l'une des revendications précédentes, **caractérisé en ce que** la au moins une box VPN (6) dispose de clés cryptographiques adaptés pour la protection de l'au moins un message VPN (4).

9. Procédé selon la revendication 8, **caractérisé en ce qu'**un accord de clé séparé est mis en place.

10. Procédé selon l'une des revendications précédentes, **caractérisé en ce que** pour la surveillance du tunnel VPN (8) au moins un message de contrôle (5) est échangé unilatéralement ou réciproquement entre plusieurs box VPN (6).

11. Procédé selon l'une des revendications précédentes, **caractérisé en ce que** la au moins une box VPN (6) émet pour la commande de différents appareils de commande (2) pour différentes fonctions électromécaniques un signal de sécurité de fonctionnement (7) en cas de fonctionnalité correcte du tunnel VPN (8).

12. Procédé selon l'une des revendications précédentes, **caractérisé en ce que**, en plus de la surveillance de la fonctionnalité du tunnel VPN (8), sa qualité est surveillée.

13. Procédé selon l'une des revendications précédentes, **caractérisé en ce qu'**un tunnel VPN séparé (8) est installé comme canal de contrôle pour des contrôles d'état ou des messages d'erreur.

14. Procédé selon l'une des revendications précédentes, **caractérisé en ce que** pour la surveillance du tunnel VPN (8) des taux de retard de données ou d'erreur sont mesurés et comparés avec des valeurs seuils déterminées.

15. Procédé selon l'une des revendications précédentes, **caractérisé en ce qu'**une surveillance d'un tunnel VPN (8) est effectuée par comparaison de l'horodatage des différents messages transmis via le tunnel VPN (8).

16. Procédé selon l'une des revendications précédentes, **caractérisé en ce que** lors de la surveillance d'un tunnel VPN (8), toutes les données prévues pour être transmises dans le tunnel VPN (8) passent par le tunnel VPN (8).

17. Procédé selon l'une des revendications précédentes, **caractérisé en ce qu'**une surveillance du canal de texte en clair est effectuée.

18. Procédé selon l'une des revendications précédentes, **caractérisé en ce que** pour le cas où un problème serait détecté sur le tunnel VPN (8), un redémarrage ou une désactivation de l'une ou plusieurs de la au moins une box VPN (6) est effectué(e).

19. Procédé selon l'une des revendications précédentes, **caractérisé en ce que** pour effectuer une analyse ultérieure d'un dysfonctionnement, un message LOG est transmis sur des voies de transmission séparées.

20. Procédé selon l'une des revendications précédentes, **caractérisé en ce qu'**en cas de panne de la communication VPN un message est envoyé à un point central ou local afin qu'un système local puisse être placé dans un état de fonctionnement sûr.

21. Dispositif pour l'exécution de surveillance de la fonctionnalité et/ou qualité d'un tunnel VPN (8) installé et protégé de manière cryptographique selon l'une des revendications 1 - 20, avec
au moins une box VPN (6) positionnée sur le tunnel VPN (8), **caractérisé en ce que** le tunnel VPN (8) est adapté pour la communication de données entre un système de commande (1) et un appareil de commande (2) et **en ce que** la box VPN (6) est prévue pour la surveillance et permet de délivrer un signal de sécurité de fonctionnement (7) à l'appareil de commande (2) lorsque la surveillance a montré que le tunnel VPN (8) remplissait des critères prédéfinis de sorte que l'appareil de commande (2) puisse passer dans un mode de fonctionnement normal ou le maintenir.

22. Dispositif selon la revendication 21, dans lequel au moins une box VPN (6) positionnée sur le tunnel VPN (8) est prévue pour surveillance,
l'évaluation de la fonctionnalité correcte et/ou la qualité du tunnel VPN (8) a lieu au moins partiellement dans le système de commande (1) et
un signal de sécurité de fonctionnement (7) peut être délivré à l'appareil de commande (2) lorsque la surveillance a montré que le tunnel VPN (8) remplissait des critères prédéfinis de sorte que l'appareil de commande (2) puisse passer dans un mode de fonctionnement normal ou le maintenir.
